# EUROPÄISCHE PATENTANMELDUNG

(11) **EP 2 711 898 A2**
(43) Veröffentlichungstag der Anmeldung: **26.03.2014**
(21) Anmeldenummer: 12196063.7
(22) Anmeldetag: 07.12.2012
(51) Int. Cl.: G07C 9/00

(54) **Schlosssteuerung mittels Gesichtsfelderkennung**

(30) Priorität: 21.09.2012 EP 12185484; 24.09.2012 EP 12185710
(71) Anmelder: BURG-WÄCHTER KG, 58540 Meinerzhagen (DE)
(72) Erfinder: Lüling, Harald, 58540 Meinerzhagen (DE)
(74) Vertreter: Stenger, Watzke & Ring

(57) **Zusammenfassung**

Die Erfindung betrifft ein Verfahren zur Ermittlung einer Zutrittsberechtigung eines Nutzers für einen bestimmten Bereich eines Gebäudes und zum automatischen Öffnen eines Türschlosses, unter Verwendung wenigstens eines biometrischen Merkmals, wobei das biometrische Merkmal mittels einer Vorrichtung zur optischen Gesichtsfelderkennung erfasst wird, das biometrische Merkmal mit individuumsbezogenen, gespeicherten Datensätzen für dieses Merkmal verglichen wird, die Vorrichtung zur optischen Gesichtsfelderkennung bei positivem Vergleichsergebnis bezüglich des Vorliegens der Zutrittsberechtigung ein Steuersignal an das Türschloss übermittelt, welches einen Befehl zur Aktivierung eines Schließzylinders des Türschlosses aufweist, und wobei der Schließzylinder eine Stellung einnimmt, die eine Öffnung des Türschlosses ermöglicht.

## Beschreibung

Die Erfindung betrifft ein Verfahren und eine Vorrichtung zur Ermittlung einer Zutrittsberechtigung eines Nutzers für einen bestimmten Bereich eines Gebäudes und zum Öffnen eines Türschlosses, unter Verwendung wenigstens eines biometrischen Merkmals, wobei das biometrische Merkmal mittels einer Vorrichtung zur optischen Gesichtsfelderkennung erfasst wird, das biometrische Merkmal mit individuumsbezogenen, gespeicherten Datensätzen für dieses Merkmal verglichen wird und dem Nutzer bei positivem Vergleichsergebnis bezüglich des Vorliegens der Zutrittsberechtigung Zutritt zu dem Bereich durch Öffnen des Türschlosses gewährt wird.

Verfahren und Vorrichtungen dieser Art sind im Stand der Technik bereits bekannt. Individuelle Zutrittsberechtigungen werden im Zuge erhöhter Sicherheitsanforderungen und durch Verwendung automatischer Zutrittsysteme immer wichtiger und finden einen immer weiteren Anwendungskreis. Dies resultiert unter anderem auch daraus, dass die verfügbare Datenverarbeitungshardware immer leistungsfähiger wird und mittlerweile immer ausgeklügeltere Kontrollsysteme zu verwirklichen erlaubt. Die moderne Informationstechnologie erlaubt es ebenfalls, enorme Datenmengen und Informationen bereitzustellen und zu verarbeiten.

Auch die Verwendung von biometrischen Merkmalen bezüglich einer Prüfung auf Vorliegen einer Zutrittsberechtigung findet immer weitere Verbreitung. Mittels seiner biometrischen Merkmale kann ein Individuum eindeutig identifiziert werden. Neben den Fingerabdrücken als bekannte biometrische Merkmale findet ebenso die Identifizierung über biometrische Merkmale des Gesichtes erhöhte Anwendung. Identifikationen und/oder Verifikationen von Personen werden in zunehmendem Maße über diese im Wesentlichen unveränderlichen oder sich nur geringfügig ändernden Kennzeichen der Personen durchgeführt. Neben Fingerabdrücken sind auch die Merkmale des Gesichtes nahezu einzigartig, sodass in der Regel die Merkmale des Gesichtsfeldes, sofern Sie bekannt sind, einer Person als Identifikationselemente zugeordnet werden können. Die Identifizierung und/oder Verifikation der Person kann beispielsweise dazu benutzt werden, dieser Person bestimmte Rechte, beispielsweise Zutrittsberechtigungen, zuzuordnen, sodass über die Identifizierung oder Verifikation des Gesichtsfeldes beispielsweise eine elektronische Schließeinrichtung entriegelbar ist, sodass die zutrittsberechtigte Person einen bestimmten geschützten Bereich in einem Gebäude betreten kann. Zur Ermittlung der Zutrittsberechtigung werden die biometrischen Merkmale des Nutzers, mit einer Vielzahl von in einem Speicher gespeicherten Daten unterschiedlicher Nutzer verglichen. Es sind Datenverarbeitungseinrichtungen bekannt, die eine große Anzahl von Rechenoperationen in kurzer Zeit ausführen können, sodass grundsätzlich eine Identifikation von Nutzern auch in kurzer Zeit durchführbar ist.

Die Gesichtsfelderkennung (oder häufig auch Gesichtserkennung genannt) wird im Rahmen der Sicherheitstechnik bereits verwendet. Dabei kommen sowohl zweidimensionale als auch dreidimensionale Verfahren zur Anwendung. Simple zweidimensionale Gesichtsfelderkennungsverfahren verwenden eine geometrische Vermessung besonderer Merkmale, zum Beispiel Augen, Nase, Mund. Hierbei wird deren Position, Abstand und Lage zueinander bestimmt. Weiterhin setzen heutige Verfahren zudem auf komplexe Berechnungen wie die Waveletanalyse oder Hauptkomponentenanalyse. Mithilfe dieser Analyseverfahren ergibt sich eine Erkennungsleistung von über 99%, d.h., etwa einer von hundert Nutzern wird nicht erkannt. Diese Rate liegt in der gleichen Größenordnung wie die aktuellen Fingerabdruck - oder Iriserkennungsverfahren und übertrifft damit die Fähigkeiten der menschlichen Gesichtsfelderkennung. Neben dieser zweidimensionalen biometrischen Gesichtserkennung, existiert ebenfalls ein Zweig, der auf die dreidimensionale Erfassung, beispielsweise mittels Streifenprojektion, des Gesichts setzt. Durch die zusätzlichen Informationen sollen eine höhere Erkennungsgenauigkeit und eine bessere Posenunabhängigkeit erzielt werden.

Es ist ebenfalls im Stand der Technik bekannt, die Verfahren und Vorrichtungen zur optischen Gesichtsfelderkennung mit Türschlössern, insbesondere elektronischen Türschlössern, zu kombinieren. Die Türschlösser dienen dazu, den unberechtigten Zutritt einer Person zu einem geschützten Bereich auszuschließen. Ohne eine entsprechende Berechtigung, beispielsweise die Bereitstellung eines gespeicherten, biometrischen Merkmals, ist es nicht möglich, das Türschloss gewaltfrei zu öffnen. Die Verwendung eines unbefugt angefertigten Nachschlüssels entfällt. Die Fälschung des hinterlegten biometrischen Merkmals ist nur mit großem Aufwand möglich, da dieser eine Reihe von Merkmalen umfasst, welche nicht mit einfachen Mitteln nachzustellen sind.

Die bekannten Türschlösser, welche in Verbindung mit einer Einheit zur optischen Gesichtsfelderkennung verwendet werden, funktionieren zumeist mittels einer elektronisch steuerbaren Fallenentriegelung, welche beispielsweise in einer zum Türblatt korrespondierenden Türzarge angeordnet ist. Bei Empfang eines entsprechenden Steuersignals wird diese Fallenentriegelung aktiviert und gibt die Schlossfalle, beispielsweise durch Verschwenken eines in der Türzarge angeordneten Riegels, frei. Die Tür kann anschließend geöffnet werden.

Gemäß dem vorgenannten Stand der Technik besteht zwischen der zargenseitig angeordneten Fallenentriegelung und der Einheit zur optischen Gesichtsfelderkennung eine Kabelverbindung, mittels welcher die Steuersignale übertragen werden. Problematisch ist dabei, dass die Fallenentriegelung leicht manipuliert werden kann, indem die Fallenentriegelung mit elektrischen Fremdimpulsen beaufschlagt wird, die ein Öffnen der Fallenentriegelung bewirken.

Da es sich des Weiteren bei den Vorrichtungen zur optischen Gesichtsfelderkennung um größere Einheiten handelt, können diese nicht immer unmittelbar neben dem Türschloss angeordnet werden. Daher sind teilweise Kabelverbindungen notwendig, welche Längen von mehreren Metern aufweisen. Dabei ergibt sich ein hoher Installationsaufwand in Bezug auf die bekannten Einrichtungen, so dass sich diese insbesondere zum Nachrüsten nicht eignen.

Insofern ist es Aufgabe der vorliegenden Erfindung, ein Verfahren und eine Vorrichtung zur Ermittlung einer Zutrittsberechtigung eines Nutzers für einen bestimmten Bereich und zum Öffnen eines Türschlosses, unter Verwendung wenigstens eines biometrischen Merkmals, zu schaffen, welche eine einfache, unkomplizierte Installation ermöglichen und zudem gegenüber den im Stand der Technik bekannten Systemen einen besseren Schutz gegen Manipulation des Türschlosses bieten.

Zur Lösung dieser Aufgabe schlägt die Erfindung ein Verfahren der vorgenannten Art vor, bei welchem die Vorrichtung zur optischen Gesichtsfelderkennung bei positivem Vergleichsergebnis bezüglich des Vorliegens der Zutrittsberechtigung ein Steuersignal an das Türschloss übermittelt, welches einen Befehl zur Aktivierung eines Schließzylinders, insbesondere eines elektronischen Schließzylinders, des Türschlosses aufweist, und wobei der Schließzylinder eine Stellung einnimmt, die eine Öffnung des Türschlosses ermöglicht. Die vorgenannte Problematik in Bezug auf die von einem Unberechtigten einfach durchzuführende Manipulation der Fallenentriegelung führt somit nicht zu einem Öffnen der Tür, da die Tür über den fallen- und riegelbetätigenden Schließzylinder gesichert ist. Das Steuersignal, welches einen Befehl zur Aktivierung des Schließzylinders aufweist, bewirkt somit ein Öffnen der Tür durch Aktivierung des Schließzylinders und damit die Möglichkeit, die Falle zu bewegen.

Weiterhin sieht die Erfindung vor, dass das Steuersignal zum Öffnen des Türschlosses per Funkübertragung von der Vorrichtung zur optischen Gesichtsfelderkennung an das Türschloss übermittelt wird. Durch die Übertragung des Steuersignals per Funk wird die im Stand der Technik notwendige Verkabelung zwischen der Vorrichtung zur optischen Gesichtsfelderkennung und dem Türschloss überflüssig. Die Vorrichtung zur optischen Gesichtsfelderkennung kann somit auch in größerer Entfernung von dem Türschloss installiert werden. Zusätzlich ist eine entsprechende Vorrichtung zur Durchführung des Verfahrens ohne großen Aufwand auch in bereits vorhandene Türsysteme zu integrieren. Somit eröffnet sich ein breiterer Einsatzbereich für die erfindungsgemäße Vorrichtung bzw. das erfindungsgemäße Verfahren.

Besonders vorteilhaft ist es dabei, dass das Steuersignal verschlüsselt übermittelt wird. Somit kann das Steuersignal, insbesondere das per Funk übertragene Steuersignal, nicht von einer unberechtigten Person erkannt und zur Öffnung des Türschlosses verwendet werden. Somit wird auch dadurch die Überwachung der Zutrittsberechtigung verbessert.

Zusätzlich sieht die Erfindung vor, dass der Nutzer eine Eingabe über eine Schnittstelle der Vorrichtung zur optischen Gesichtsfelderkennung tätigt, wobei das biometrische Merkmal des Nutzers mit dem Inhalt der Eingabe verglichen wird. Diese zusätzliche Eingabe kann dabei über eine Tastatur oder auch einen Datenleser oder einen aktiven oder passiven Transponderempfänger erfolgen. Im Falle einer Tastatur als Schnittstelle, gibt der Nutzer beispielsweise einen Identifikationskode über die auf einem Bildschirm angezeigte Tastatur ein, welcher ihn eindeutig identifiziert. Ein solcher Kode kann beispielsweise ein mehrstelliger Zahlenkode sein, ähnlich einer Pin-Nummer. Im Falle eines Datenlesers als Schnittstelle führt der Nutzer ein Speichermedium, beispielsweise einen ihn identifizierenden Ausweis, eine SD-Karte, einen USB-Stick oder ähnliches, in den Datenleser ein, oder bringt einen aktiven oder passiven Transponder in Funkverbindung mit einem Transponderempfänger. Der Datenleser bzw. der Transponderempfänger gibt die auf dem Speichermedium gespeicherten Daten an die Vorrichtung zur optischen Gesichtsfelderkennung weiter, sodass diese dort mit den biometrischen Merkmalen des Nutzers verglichen werden können. Im Falle eines Transponderempfängers führt der Nutzer besonders einfach einen Transponder, beispielsweise einen RFID-Chip, mit sich, welchen der Empfänger in seinem Sende-Empfangsbereich automatisch erkennt. Somit ergibt sich durch eine zusätzliche Eingabe eine erhöhte Sicherheit bei der Ermittlung der Zutrittsberechtigung, da die in der Vorrichtung zur optischen Gesichtsfelderkennung gespeicherten individuumsbezogenen Datensätze sowohl mit den biometrischen Merkmalen, d.h. den Merkmalen des Gesichtsfeldes, des Nutzers verglichen werden als auch mit einem von ihm eingegebenen Kode oder den auf einer entsprechenden Karte, einem Chip, einem Stick oder einem Transponder gespeicherten Daten. Es werden folglich stets zwei Parameter verwendet, um die Person eindeutig zu identifizieren. Dies unterscheidet sich von einer beispielsweise nur anhand der biometrischen Merkmale vorgenommenen Verifikation hinsichtlich der Sicherheit bei der Entscheidung über die Zutrittsberechtigung.

Es ist weiterhin vorgesehen, dass die individuumsbezogenen Datensätze in einem externen Speicher gespeichert werden. Somit müssen die individuumsbezogenen Datensätze nicht unmittelbar in einem Speicher der Vorrichtung zur optischen Gesichtsfelderkennung hinterlegt sein, sondern können auf einem mobilen, austauschbaren Speicherelement, beispielsweise einem USB-Stick, einer SD-Karte oder ähnlichem, gespeichert werden. Hierdurch ergeben sich Vorteile in Bezug auf die Variabilität der gespeicherten Datensätze. Beispielsweise können für eine Zutrittsberechtigung an einem bestimmten Tag andere individuumsbezogene Datensätze relevant sein als an einem darauffolgenden Tag. Dies ist beispielsweise der Fall bei der Nutzung eines Konferenzgebäudes oder auch eines Veranstaltungssaals, bei welchem die Nutzer täglich wechseln. Durch die Erfindung entfällt ein häufiges Löschen und Neuspeichern von Datensätzen auf der Vorrichtung zur optischen Gesichtsfelderkennung, stattdessen können einfach entsprechende externe Speicherelemente für den jeweiligen Tag bzw. die jeweilige Veranstaltung verwendet werden. Weiterhin kann auch vorgesehen sein, dass die Datensätze nicht unmittelbar in einem festen Speicher der Vorrichtung zur optischen Gesichtsfelderkennung oder in einem mobilen externen Speicher gespeichert sind, sondern in einer mit der Vorrichtung zur optischen Gesichtsfelderkennung verbundenen Datenbank. Im Falle eines aus mehreren Vorrichtungen zur optischen Gesichtsfelderkennung bestehenden Systems lassen sich somit Daten leicht austauschen und ändern. Für einen Austausch von Daten zwischen den einzelnen Vorrichtungen zur optischen Gesichtsfelderkennung kommt insbesondere auch eine Übertragung per Bluetooth in Betracht.

Schließlich sieht die Erfindung vor, dass die Vorrichtung zur optischen Gesichtsfelderkennung mittels interner oder externer Lichtquellen Licht im sichtbaren (VIS) und/oder infraroten (NIR, IR) Wellenlängenspektrum, insbesondere mittels LEDs, emittiert. Die Kombination von Licht unterschiedlicher Wellenlängen, beispielsweise sowohl im sichtbaren als auch im infraroten Bereich, können kleinere und größere Merkmale des Gesichtes eines Nutzers mit gleicher Messgenauigkeit bestimmt werden. Ebenfalls lassen sich aufgrund des unterschiedlichen Reflektionsgrades einzelner Zonen des Gesichtes in Bezug auf unterschiedliche Wellenlängen des Lichtes Unterschiedsmerkmale vereinfacht feststellen. Besonders vorteilhaft ist dabei der Einsatz von LEDs, welche besonders kostengünstig sind und somit zu einer kostengünstigen Herstellung der gesamten Vorrichtung beitragen.

Obwohl die Erfindung bisher hauptsächlich in Bezug auf das Verfahren erläutert wurde, soll gleichzeitig auch eine zur Ausführung des Verfahrens notwendige Vorrichtung in die Erfindung mit einbezogen sein. Die in Bezug auf das Verfahren erläuterten Merkmale gelten dabei entsprechend auch für die Vorrichtung.

Im Folgenden wird die Erfindung anhand eines Ausführungsbeispiels näher erläutert.

Die erfindungsgemäße Vorrichtung verfügt über ein Türschloss mit einem elektronischen Schließzylinder, einem Schlossriegel und einer Schlossfalle, sowie über eine Vorrichtung zur optischen Gesichtsfelderkennung, welche Lichtquellen zur Beleuchtung des Gesichtes des Nutzers und Detektoren zum Empfang des reflektierten Lichtes aufweist, welche insbesondere LEDs sind, die im sichtbaren und/oder infraroten Wellenlängenbereich emittieren. Die Lichtquellen können in die Vorrichtung integriert (interne Lichtquellen) und/oder außerhalb der Vorrichtung angeordnet sein (externe Lichtquellen).

Zwischen der Vorrichtung zur optischen Gesichtsfelderkennung und dem Schließzylinder besteht eine Funkverbindung, über welche Steuersignale, die einen Befehl zum Öffnen des Türschlosses enthalten, an den Schließzylinder übermittelt werden können. Die Vorrichtung zur optischen Gesichtsfelderkennung verfügt in diesem Ausführungsbeispiel neben den vorgenannten Sensoren und Detektoren ebenfalls über eine Tastatur und einen Datenleser. Der Datenleser kann dabei ein Kartenleser sein, ein Lesegerät für aktive oder passive Transponder oder auch ein Gerät zum Auslesen eines USB-Sticks, einer SD-Karte etc. In einem internen Speicher der Vorrichtung zur optischen Gesichtsfelderkennung sind individuumsbezogene Datensätze mit biometrischen Merkmalen der Gesichtsfelder einer Vielzahl von Nutzern gespeichert. Alternativ können die individuumsbezogenen Datensätze auch auf einem externen, mobilen Speicher, beispielsweise einem USB-Stick oder einer SD-Karte gespeichert sein.

Um Zutritt zu einem bestimmten Bereich eines Gebäudes zu erlangen, stellt sich ein Nutzer in den Wirkungsbereich der Lichtquellen und Sensoren der Vorrichtung zur optischen Gesichtsfelderkennung. Die Vorrichtung registriert seine Anwesenheit und aktiviert die Lichtquellen, sodass das Gesicht des Nutzers ergänzend mit sichtbarem und/oder infrarotem Licht bestrahlt wird. Das von dem Gesicht des Nutzers reflektierte Licht wird von den Sensoren der Vorrichtung zur optischen Gesichtsfelderkennung detektiert und einer Auswerteeinheit zugeführt. Zusätzlich kann der Nutzer über einen Bildschirm zur Eingabe eines Identifikationskodes oder zur Vorlage einer Ausweiskarte aufgefordert werden. Dazu gibt der Nutzer über die Tastatur der Vorrichtung seinen Identifikationskode, welcher beispielsweise ein mehrstelliger Zahlenkode sein kann, ein. Alternativ oder zusätzlich kann die Vorrichtung auch eine Chipkarte, einen USB-Stick oder einen aktiven oder passiven Transponder detektieren, wobei die darin gespeicherten Identifikationsdaten in die Vorrichtung zur optischen Gesichtsfelderkennung eingelesen werden. Anschließend werden die von der Tastatur, dem Datenleser bzw. den optischen Sensoren aufgenommenen Merkmale miteinander und mit individuumsbezogenen, in der Vorrichtung oder auf einem externen Speicher gespeicherten Datensätzen verglichen und im Falle eines positiven Vergleichsergebnisses bezüglich des Vorliegens der Zutrittsberechtigung bestätigt. Daraufhin sendet die Vorrichtung zur optischen Gesichtsfelderkennung ein Steuersignal an das Türschloss, welches einen Befehl zur Aktivierung des elektronischen Schließzylinders aufweist. Dieses Steuersignal wird per Funkübertragung an das Türschloss übermittelt, sodass keine Kabelverbindungen zwischen Türschloss und Vorrichtung zur optischen Gesichtsfelderkennung notwendig sind. Zusätzlich ist das Steuersignal verschlüsselt, sodass eine Abhörsicherheit in Bezug auf das übertragene Signal gegeben ist. Das Steuersignal wird von einer Empfangseinheit des Türschlosses erkannt und bewirkt einen Impuls, welcher auf den Schließzylinder des Türschlosses einwirkt. Der Schlossriegel wird für den Öffnungsvorgang vollständig von der Schließposition in die Öffnungsposition überführt, sodass der Nutzer die Tür öffnen kann.

Sofern ein Nutzer der erfindungsgemäßen Vorrichtung und des erfindungsgemäßen Verfahrens nicht über eine Zutrittsberechtigung für den durch die Vorrichtung gesicherten Bereich verfügt, wird ihm dies beispielsweise mittels einer Anzeigeeinrichtung, insbesondere auf einem Monitor, angezeigt. Dabei kann er auch eine Information darüber erhalten, dass beispielsweise der von ihm eingegebene Kode oder die Chipkarte, der USB-Stick, der Transponder usw. fehlerhaft ist.

Das voranstehend beschriebene Verfahren sowie die voranstehend beschriebene Vorrichtung zur Ermittlung der Zutrittsberechtigung können insbesondere mit einer nachfolgend zu beschreibenden Vorrichtung zur optischen Gesichtsfelderkennung ausgeführt bzw. betrieben werden.

Üblicherweise werden beispielsweise für die Gesichtsfelderkennung schwarz-weiß-Kameras oder sogenannte RGB-Kameras verwendet. Derartige RGB-Kameras nutzen ein RGB-Signal, bei dem die Farben rot, grün und blau jeweils in einem eigenen Kanal übertragen bzw. gespeichert werden. RGB-Signale werden zum Beispiel bei Computern über den VGA-Anschluss, Cinch-Stecker oder in der Videotechnik über den Scart-Anschluss übertragen. Diese Kameras nutzen oftmals drei unabhängige Sensoren, um ein dreifarbiges Signal zu generieren.

Im Bereich der Gesichtsfelderkennung hat sich aber gezeigt, dass mit diesen schwarz-weiß-Kameras oder RGB-Kameras eine ausreichende Sicherheit nicht erzielt werden kann, soweit eine entsprechende Gesichtsfelderkennung beispielsweise zur Steuerung eines Schlosses genutzt wird. Die von schwarz-weiß-Kameras oder RGB-Kameras aufgezeichneten Bilder sind einfach manipulierbar, sodass natürlich auch die Sicherheitsanforderungen hinsichtlich beispielsweise einer Schlosssteuerung nicht erfüllt werden. Um diesen Missstand abzustellen ist es bislang üblich, dass neben einer schwarz-weiß-Kamera oder einer RGB-Kamera eine separate Infrarotkamera ergänzend verwendet wird. Die Infrarotstrahlung reicht definitionsgemäß über einen spektralen Bereich von ca. 700 nm bis 14 µm, wobei dieser Bereich wiederum eingeteilt ist in das "nahe Infrarot" (700 nm - 3 µm), das "mittlere Infrarot" (3 µm bis 8 µm) und das "ferne Infrarot" (8 µm bis 50 µm).

Im Rahmen der Erfindung wird vorrangig der Wellenlängenbereich des "nahen Infrarot" genutzt, wobei das vom zu betrachtenden Objekt reflektierte Licht ausgewertet wird. In diesem Fall wird das Objekt mit einer Lichtquelle angestrahlt, die eine elektromagnetische Strahlung mit einer Wellenlänge von 700 nm bis 3 µm emittiert, wobei diese Strahlung dann reflektiert und von der Kamera aufgenommen wird.

In der Regel ist es bei der Gesichtsfelderkennung - wie zuvor dargestellt - üblich, sowohl eine schwarz-weiß-Kamera oder RGB-Kamera als auch eine Kamera zur Aufnahme reflektierter Infrarotstrahlen, einzusetzen, wobei die Infrarotstrahlung von einer Lichtquelle emittiert wird. Diesbezüglich ist eine umfangreiche Vorrichtung notwendig, die zum Beispiel aufgrund der Verwendung von zwei Kameras und möglicherweise auch zwei getrennter Gehäuse konstruktiv aufwendig ist.

Erfindungsgemäß ist nun vorgesehen, dass lediglich eine einzige Kamera zum Einsatz kommt. Da die sogenannten CCD-Sensoren (Charge Coupled Device) bzw. CMOS-Sensoren (Complementary Metal Oxide Semi conductor) herkömmlicher schwarz-weiß-Kameras bzw. RGB-Kameras grundsätzlich sowohl zur Detektion von sichtbarem als auch infrarotem Licht geeignet sind, kann die Erfindung allein mit einer modifizierten schwarz-weiß-Kamera oder RGB-Kamera ausgeführt werden, ohne dass zusätzlich eine Infrarotkamera erforderlich ist. Die erfindungsgemäße Kamera besteht dabei aus dem Sensor, einem Objektiv, Elektronikkomponenten und einem optischen Filter für sichtbares Licht. Ein Infrarotfilter (IR-Filter) kann zusätzlich vorgesehen sein und im Fall einer RGB-Kamera ist zumindest ein RGB-Filter vorgesehen. Der optische Filter ist geeignet, das sichtbare Licht herauszufiltern, sodass nur das Infrarotlicht den Kamerasensor erreicht, während der IR-Filter geeignet ist, das Infrarotlicht herauszufiltern, sodass der Sensor nur das sichtbare Licht empfängt. Sowohl der optische Filter für sichtbares Licht als auch der IR-Filter sind schwenkbeweglich so angeordnet, dass sie in die optische Achse zwischen dem Objektiv und dem Sensor geschwenkt werden können. Je nach den Umgebungsbedingungen oder Lichtverhältnissen wird einer oder beide Filter aus der optischen Achse heraus geschwenkt. So ist es beispielsweise denkbar, dass insbesondere bei einer Anwendung bei Nacht keiner der beiden Filter zwischen dem Objektiv und dem Sensorchip angeordnet ist, während für den Betrieb bei Tageslicht der IR-Filter in die optische Achse eingeschwenkt wird, sodass nur das sichtbare Licht den Sensor erreichen kann. Demgegenüber kann die Kamera bevorzugt bei Nacht so betrieben werden, dass der Filter für das sichtbare Licht (VIS-Filter) in die optische Achse eingeschwenkt wird, sodass nur das Infrarotlicht den Sensor erreicht. Dabei wird die Kamera quasi von einer "normalen" Kamera zu einer Kamera für die Gesichtsfelderkennung. Dadurch kann ein mit Infrarotlicht bestrahltes Gesicht oder auch ein Infrarotlicht aussendendes Gesicht detektiert werden. Diese Vorgehensweise weist eine erhöhte Erkennungszuverlässigkeit für die Gesichtsfelderkennung zur Steuerung eines Türschlosses auf, sodass das System beispielsweise nicht mit Nachbildungen eines Gesichts oder dergleichen manipuliert werden kann. Bei der erfindungsgemäßen Vorrichtung ist vorgesehen, dass beispielsweise Merkmale unterhalb der Haut durch die entsprechende Infrarotbestrahlung oder Infrarotemission für die Kamera sichtbar gemacht werden und zur Steuerung des Schlosses genutzt werden können. Dabei wird berücksichtigt, dass beispielsweise Narben, Muttermale etc. eine andere Infrarotwellenlänge aussenden als andere Hautstellen.

In der Regel wird der optische Filter für das sichtbare Licht konstant zur Gesichtsfelderkennung mittels Infrarotlicht eingeschwenkt. Lediglich in wenigen Ausnahmefällen ist ein Verschwenken dieses optischen Filters aus der optischen Achse vorgesehen. Von daher bestehen grundsätzlich die Möglichkeiten, den Filter für sichtbares Licht relativ zur optischen Achse verschwenkbar auszugestalten oder aber auch derart in die Kamera zu integrieren, dass ein Verschwenken nicht möglich ist.

Dem entsprechend sind folgende drei Anwendungssituationen zu unterscheiden, welche jeweils in einer Figur dargestellt sind. Dabei zeigen:
Fig. 1: Nachtbetrieb der Kamera,
Fig. 2: Tagbetrieb der Kamera,
Fig. 3: Gesichtserkennungsbetrieb der Kamera.

Die vorgenannten drei Betriebsarten können selbstverständlich auch variiert werden, sodass auch bei abweichenden Tageszeiten oder Anwendungssituationen eine individuell anpassbare Detektion möglich ist.

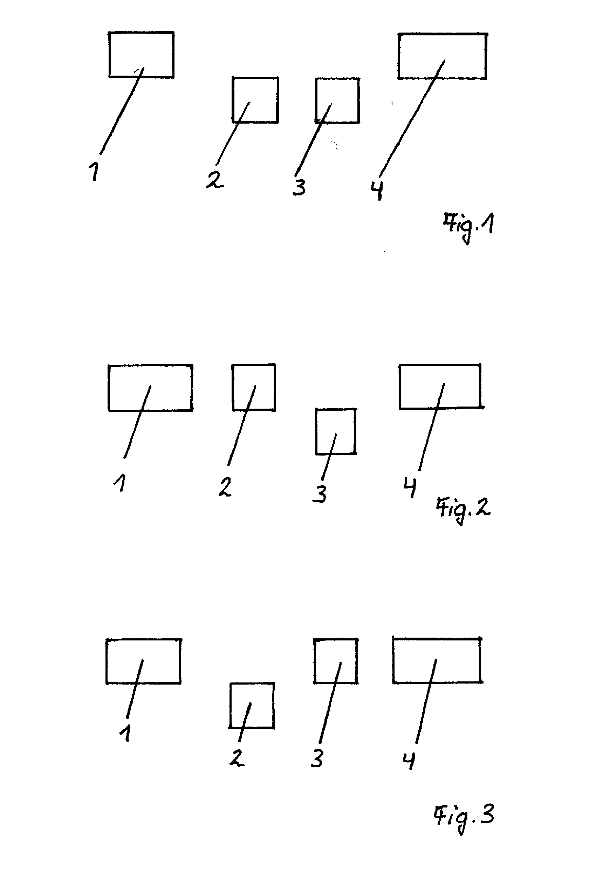

Die Figuren 1 bis 3 zeigen jeweils einen Sensor 1, einen Infrarotfilter 2, einen Filter für sichtbares Licht 3 und eine Optik 4. Der Sensor 1 kann ein CCD-Chip oder beispielsweise auch ein CMOS-Chip sein. Die Optik 4 besteht regelmäßig aus mehreren optischen Bauteilen darunter insbesondere Linsen. Die Filter 2, 3 sind bevorzugt als Interferenzfilter ausgebildet.

Für den Nachtbetrieb der Kamera gemäß Figur 1 befindet sich auf der optischen Achse zwischen dem Sensor 1 und der Optik 4 kein Filter. In diesem Fall erreicht die gesamte Strahlung, welche die Optik 4 passiert, den Sensor 1. Diese umfasst sowohl sichtbares als auch infrarotes Licht. Durch die Detektion von sowohl sichtbarem als auch infrarotem Licht kommt es zu einer Farbverfälschung, welche jedoch für den Nachtbetrieb nicht relevant ist. Wesentlich ist dabei eher, dass möglichst viel Licht auf den Sensor 1 fällt.

Gemäß dem in Figur 2 dargestellten Tagbetrieb der Kamera ist in der optischen Achse zwischen Sensor 1 und Optik 4 der Infrarotfilter 2 eingeschwenkt. Dadurch wird das Infrarotlicht rausgefiltert, sodass lediglich das sichtbare Licht den Sensor 1 erreichen kann. Dies ermöglicht vorteilhaft eine Detektion und Darstellung in "Echtfarben", sodass das von der Kamera detektierte Bild dem vom menschlichen Auge wahrgenommenen Bild entspricht.

Figur 3 zeigt einen besonderen Betriebsmodus der Kamera zur Gesichtserkennung mittels Infrarotlicht. Dabei ist zwischen Sensor 1 und Optik 4 der Filter für sichtbares Licht 3 angeordnet, sodass nur das infrarote Licht den Sensor 1 erreicht. In dieser Betriebsweise können bevorzugt Merkmale unterhalb der Haut detektiert werden, die durch die Infrarotstrahlung für die Kamera sichtbar gemacht werden. Das ansonsten störende sichtbare Licht wird durch den Filter 3 zuverlässig herausgefiltert. Dieser Betriebsmodus ist auch beim Nachtbetrieb der Kamera möglich.

Bei den vorgenannten Ausführungsbeispielen ist zu berücksichtigen, dass entsprechende Vorrichtungen nicht nur in Kombination mit Schlössern Anwendung finden können. Vielmehr kann auch vorgesehen sein, dass eine derartige Vorrichtung in ganz üblicher Weise für die Überwachung von Objekten eingesetzt wird. Des Weiteren kann eine derartige Vorrichtung auch zur Steuerung von Maschinen mit notwendiger Personenerkennung genutzt werden.

## Patentansprüche

1. Verfahren zur Ermittlung einer Zutrittsberechtigung eines Nutzers für einen bestimmten Bereich eines Gebäudes und zum Öffnen eines Türschlosses, unter Verwendung wenigstens eines biometrischen Merkmals, wobei
- das biometrische Merkmal mittels einer Vorrichtung zur optischen Gesichtsfelderkennung erfasst wird,
- das biometrische Merkmal mit individuumsbezogenen, gespeicherten Datensätzen für dieses Merkmal verglichen wird,
- die Vorrichtung zur optischen Gesichtsfelderkennung bei positivem Vergleichsergebnis bezüglich des Vorliegens der Zutrittsberechtigung ein Steuersignal an das Türschloss übermittelt, welches einen Befehl zur Aktivierung eines Schließzylinders, insbesondere eines elektronischen Schließzylinders, des Türschlosses aufweist, und wobei
- der Schüeßzylinder eine Stellung einnimmt, die eine Öffnung des Türschlosses ermöglicht.

2. Verfahren nach Anspruch 1, **dadurch gekennzeichnet, dass** das Steuersignal per Funkübertragung an das Türschloss übermittelt wird.

3. Verfahren nach Anspruch 1 oder 2, **dadurch gekennzeichnet, dass** der Nutzer zusätzlich eine Eingabe über eine Schnittstelle der Vorrichtung zur optischen Gesichtsfelderkennung tätigt, wobei das biometrische Merkmal des Nutzers mit dem Inhalt der Eingabe verglichen wird.

4. Verfahren nach Anspruch 3, **dadurch gekennzeichnet, dass** die Eingabe über eine Tastatur, insbesondere eine Tastatur in einem Bildschirm, erfolgt.

5. Verfahren nach Anspruch 3 oder 4, **dadurch gekennzeichnet, dass** die Eingabe über einen Datenleser oder einen aktiven oder passiven Transponderempfänger erfolgt.

6. Verfahren nach einem der vorhergehenden Ansprüche, **dadurch gekennzeichnet, dass** die Vorrichtung zur optischen Gesichtsfelderkennung mittels interner oder externer Lichtquellen Licht im sichtbaren (VIS) und/oder infraroten (NIR, IR) Wellenlängenspektrum, insbesondere mittels LEDs, emittiert.

7. Vorrichtung zur Ermittlung einer Zutrittsberechtigung eines Nutzers für einen bestimmten Bereich eines Gebäudes und zum automatischen Öffnen eines Türschlosses, mit einer Vorrichtung zur optischen Gesichtsfelderkennung, welche interne oder externe Lichtquellen zur Beleuchtung des Gesichtes des Nutzers mit sichtbarem und/oder infrarotem Licht und mindestens einem Sensor (1) zum Empfang des von dem Gesicht reflektierten Lichtes aufweist, und mit einem Türschloss, wobei die Vorrichtung zur optischen Gesichtsfelderkennung zum Zwecke der Übertragung von Steuersignalen mit dem Türschloss verbunden ist, **dadurch gekennzeichnet, dass** das Türschloss einen Schließzylinder aufweist, und dass ein Steuersignal der Vorrichtung zur optischen Gesichtsfelderkennung einen Befehl zur Aktivierung des Schließzylinders enthält.

8. Vorrichtung nach Anspruch 7, **dadurch gekennzeichnet, dass** die Vorrichtung zur optischen Gesichtsfelderkennung mittels einer Funkverbindung mit dem Türschloss verbunden ist.

9. Vorrichtung nach Anspruche 7 oder 8, **gekennzeichnet durch** eine Tastatur.

10. Vorrichtung nach einem der Ansprüche 7 bis 9, **gekennzeichnet durch** einen Datenleser oder einen aktiven oder passiven Transponderempfänger.

11. Vorrichtung nach einem der Ansprüche 7 bis 10, **gekennzeichnet durch** Lichtquellen, welche im sichtbaren (VIS) und/oder infraroten (NIR, IR) Wellenlängenspektrum emittieren.

12. Vorrichtung nach einem der Ansprüche 7 bis 11, **dadurch gekennzeichnet, dass** die Vorrichtung zur optischen Gesichtsfelderkennung einen Sensor (1) zur Detektion sowohl des sichtbaren als auch des infraroten Lichtes und einen Filter für sichtbares Licht (3) aufweist, wobei der Filter für sichtbares Licht (3) in den bzw. aus dem Lichtweg zwischen Gesicht und Sensor (1) verschwenkbar sind.

13. Vorrichtung nach Anspruch 12, **dadurch gekennzeichnet, dass** die Vorrichtung einen Infrarotfilter (2) aufweist.

14. Vorrichtung nach Anspruch 12 oder 13, **dadurch gekennzeichnet, dass** der Sensor (1) ein CCD-Sensor oder CMOS-Sensor ist.

15. Vorrichtung nach einem der Ansprüche 12 bis 14, **gekennzeichnet durch** ein in Propagationsrichtung des Lichtes vor den Filtern (2, 3) angeordnetes Objektiv (4).

16. Vorrichtung nach einem der Ansprüche 12 bis 15, **dadurch gekennzeichnet, dass** der Infrarotfilter (2) und der Filter für sichtbares Licht (3) unabhängig voneinander verschwenkbar sind.
